# EUROPÄISCHE PATENTSCHRIFT

(11) **EP 1 988 229 B1**
(45) Veröffentlichungstag und Bekanntmachung des Hinweises auf die Patenterteilung: **12.08.2015**
(21) Anmeldenummer: 08103791.3
(22) Anmeldetag: 30.04.2008
(51) Int. Cl.: E04C 2/292

(54) **Paneel zum Bau einer Wand oder einer Decke eines Bauwerks und Bauwerksteil hergestellt aus solchen Paneelen**
Panel for constructing a wall or a ceiling of a construct and construction component made from such panels
Panneau de construction d'un mur ou d'un plafond d'une construction et élément de construction fabriqué à partir de tels panneaux

(30) Priorität: 30.04.2007 DE 102007020494
(43) Veröffentlichungstag der Anmeldung: 05.11.2008
(73) Patentinhaber: Hoesch Bausysteme GmbH, 57223 Kreuztal (DE)
(72) Erfinder: Conrad, Frank, 23774, Heiligenhafen (DE); Litzkow, Andreas, 23684, Gleschendorf (DE)
(74) Vertreter: Emde, Eric

(56) Entgegenhaltungen:
- BE-A- 824 050
- DE-A- 10 142 298
- DE-U- 8 803 615
- GB-A- 2 168 732

## Beschreibung

Die Erfindung betrifft ein Paneel nach dem Oberbegriff von Anspruch 1.

Ebenso betrifft die Erfindung ein Bauwerksteil nach dem Oberbegriff von Anspruch 14.

Beim Zusammenbau von Wänden oder Decken der voranstehend angegebenen Art werden die einzelnen Paneele aneinandergereiht und im Bereich der zwischen den einzelnen Paneelen sich bildenden Fugen mechanisch miteinander verbunden. Um dies möglichst einfach durchführen zu können, sind in der DE 81 08 886 U1 Wandpaneele vorgeschlagen worden, die in der eingangs angegebenen Weise mit Vorsprüngen und Nuten an ihren Schmalseiten versehen sind.

Bei diesen bekannten Wandpaneelen tragen die gegenüber den Schmalseiten der Paneele frei vorstehenden Vorsprünge als Rastformelemente leicht gewölbte oder keilförmige Erhebungen. Im Zuge der Montage einer Wand aus den bekannten Paneelen werden die Rastvorsprünge eines ersten Wandpaneels dann in die Nuten des jeweils nächst benachbart angeordneten Paneels eingeschoben. Dabei trifft die Rast-Erhebung auf die Außenlängsseite der jeweiligen Nut, so dass der jeweilige Rastvorsprung leicht verbogen und mit einer gewissen Vorspannung gegen die Außenlängsseiten der betreffenden Nut gedrückt wird.

Um in der Montagestellung die formschlüssige Verbindung der aneinander angrenzenden Wandpaneele zu sichern, sind bei den bekannten Wandpaneelen an den Außenlängsseiten der Nuten jeweils Rasten ausgebildet, in die die Rast-Erhebungen der Rastvorsprünge bei Erreichen der Endstellung der Wandpaneele greifen.

Gleichzeitig ist bei den bekannten Paneelen im Bereich von deren Schmalseiten zwischen den Rastvorsprüngen und den Nuten jeweils ein Mittelabschnitt vorhanden, an dem der Dämmkern der Paneele frei liegt. Der Mittelabschnitt der mit den Nuten versehenen ersten Schmalseite ist dabei nach Art eines Vorsprungs ausgebildet, während der Mittelabschnitt der mit den Rastvorsprüngen versehenen zweiten Schmalseite als Einsenkung ausgebildet ist, deren Form und Lage im Sinne einer Gegenform an die Form des vorsprungartigen Mittelabschnitts der ersten Schmalseite angepasst ist. Dementsprechend greift beim Zusammenbau einer Wand aus den bekannten Paneelen der vorsprungartige Mittelabschnitt des einen Paneels in den als Einsenkung ausgebildeten Mittelabschnitt des nächstbenachbarten Paneels, so dass auch im Bereich der Fügezone die wärmedämmende Wirkung der Dämmkerne der Wandpaneelen im Wesentlichen unterbrechungsfrei gewährleistet ist.

Durch die bekannte Art und Weise der Verbindung von Wandpaneelen lassen sich aus ihnen Wände oder Decken in kurzer Zeit mit geringem Aufwand aufbauen. Die besondere Konstruktion der bekannten Wandpaneele stellt dabei sicher, dass es auch im Bereich der Fügezonen zu keinen Wärmebrücken zwischen den durch die Wand getrennten Bereichen kommt. Durch in den Fugenbereich eingelegte, die Fügezone gegenüber der Umgebung abdichtende elastische Dichtungsstreifen lässt sich zusätzlich jede Dampfdiffusion im Bereich der Stoßstellen ausschließen.

Um die Dichtheit von in der bekannten Weise aufgebauten Wänden weiter zu erhöhen, ist in der DE 82 20 380 U1 vorgeschlagen worden, an der einen Schmalseite in bekannter Weise Nuten einzuformen und an der anderen Schmalseite der Wandpaneele Vorsprünge auszubilden. Die Lage und Form der Vorsprünge und Nuten sind dabei so aneinander angepasst, dass die Vorsprünge eines ersten Wandpaneels nach der Montage der Wand mit ihren innenliegenden, einander zugeordneten Flächen unter einem gewissen Anpressdruck an den Innenlängsseiten der Nuten des nächstbenachbarten Wandpaneels anliegen. Auf diese Weise soll einerseits die Wärmedämmung im Bereich der Fügezone verbessert und andererseits auf eine Verrastung der Wandpaneele verzichtet werden können. Die lagesichere Verbindung der Wandpaneele soll dabei dadurch unterstützt werden können, dass in die Fügezone eine Dichtmasse, wie beispielsweise Kitt oder ein vergleichbarer Dichtstoff, eingebracht wird.

Praktische Erfahrungen mit in der voranstehend erläuterten Weise aus Wandpaneelen der bekannten Art zusammengesetzten Wänden zeigen, dass insbesondere die aus der DE 81 08 886 U1 bekannten Wände die an ihre Wärmedämmeigenschaften gestellten Anforderungen sicher erfüllen. Dies macht sie besonders geeignet für den Bau von Kühlräumen oder vergleichbaren Anwendungen. Allerdings zeigt sich, dass die bekannten Wände die heutzutage bei bestimmten Bauanwendungen an ihre Feuerbeständigkeit gestellten Anforderungen nicht erfüllen. So erreichen mit nach dem bekannten Muster gebauten Wänden zwar in der Regel die in der DIN 4102-XX definierten Anforderungen der Klasse F30, verfehlen aber häufig die Anforderungen der Sicherheitsklassen F60 und höher.

Neben dem voranstehend diskutierten Stand der Technik ist aus der BE 824 050 A ein vergleichbar aufgebautes Paneel zum Bau einer Wand eines Bauwerks bekannt, das einen aus einem wärmedämmenden Werkstoff gebildeten Dämmkern und den Dämmkern auf seinen Außenseiten abdeckende Deckschalen umfasst, die aus einem Blechmaterial vorgeformt sind. An der ersten Schmalseite des Dämmkerns sind dabei zwei mit Material des Dämmkerns gefüllte Vorsprünge ausgebildet, die jeweils von einer der Außenseiten des Paneels zugeordneten Deckschale umgrenzt sind. An der der ersten Schmalseite gegenüberliegenden Schmalseite des Dämmkerns ist dabei benachbart zu jeder der Außenflächen des Paneels jeweils eine Nut eingeformt. Diese Nut ist seitlich durch eine der jeweiligen Außenseiten des Paneels zugeordnete Außenlängsseite und eine der betreffenden Außenlängsseite gegenüberliegende angeordnete Innenlängsseite sowie eine die Außenlängsseite und Innenlängsseite verbindende Grundfläche umgrenzt. Gleichzeitig ist die Nut derart an die Form und Lage der Vorsprünge des Dämmkerns angepasst, dass im Montagezustand die Vorsprünge des Paneels in die jeweils korrespondierende Nut eines gleichartig geformten, dicht an das erste Paneel gesetzten zweiten Paneels greifen können. Ferner sind die Außenlängsseite, die Innenlängsseite und die Grundfläche der Nuten des Dämmkerns von Blechmaterial der der jeweiligen Außenseiten des Paneels zugeordneten Deckschalen bedeckt.

Aus der GB-A-2 168 732 ist es schließlich bekannt, dass bei einem aus Paneelen der voranstehend erläuterten Art zusammengesetzten Wandflächenelement die Paneelen miteinander dadurch verrastet werden können, dass an der einen Schmalseite der Paneele von einem Blechmantel ummantelte Rastvorsprünge vorgesehen sind. Diese Rastvorsprünge sind an der Außenseite des Paneels angeordnet und greifen bei zusammengesetztem Wandflächenelement in einen von außen in das jeweils andere Element eingeformten Absatz. Dabei trägt der jeweilige Vorsprung des einen Paneels ein Rastelement, das mit einem korrespondieren geformten Rastelement des Absatzes zusammenwirkt. Zusätzlich zu den äußeren Rastvorsprüngen sind bei diesen Paneelen innenliegende, am Endabschnitt des einen Paneels angeformte kleine Vorsprünge vorgesehen, welche in deutlich größer geformte Nuten vorstehen. Zur Verbesserung des Brandschutzes kann in diese Nuten eine Dichtmasse eingefüllt sein, um den Durchtritt von Hitze durch den zwischen zwei benachbarten Paneelen vorhandenen Spalt zu verhindern.

Vor dem Hintergrund des voranstehend erläuterten Stand der Technik lag der Erfindung die Aufgabe zu Grunde, ein Paneel zu schaffen, mit der sich Wände oder Decken zusammensetzen lassen, bei denen mit einfachen konstruktiven Maßnahmen die feuerhemmende Wirkung verbessert ist. Genauso sollte ein aus Paneelen zusammengesetztes Bauwerksteil angegeben werden, das den erhöhten Anforderungen an die Feuerhemmung genügt. Schließlich sollte ein Verfahren angegeben werden, das die kostengünstige Herstellung von erfindungsgemäßen Paneelen erlaubt.

In Bezug auf das Paneel ist diese Aufgabe erfindungsgemäß durch die Lehre des Anspruchs 1 gelöst worden. Vorteilhafte Ausgestaltungen dieser Lehre sind in den auf Anspruch 1 rückbezogenen Ansprüchen angegeben.

In Bezug auf das aus Paneelen zusammengesetzte Bauwerksteil ist die erfindungsgemäße Lösung der voranstehend genannten Aufgabe in Anspruch 13 angegeben. In den auf Anspruch 13 rückbezogenen Ansprüchen sind vorteilhafte Ausgestaltungen dieser Lösung genannt.

Der erfindungsgemäßen Gestaltung eines Paneels und eines aus Paneelen zusammengesetzten Bauwerksteil liegt der Gedanke zugrunde, die für die formschlüssige Verbindung zweier Paneele benötigten Formelemente "Vorsprünge" und "Nuten" derart auszugestalten, dass einerseits eine Rastverbindung zwischen der Innenlängsseite der Nuten und dem im Montagezustand jeweils in sie eingreifenden Vorsprung herstellbar ist und andererseits sowohl die Nuten als auch die Vorsprünge so beschaffen sind, dass im Bereich der Rastverbindung ein Anpressdruck und eine Materialpaarung vorhanden ist, durch die eine optimale Feuerschutzwirkung erzielt wird.

So wird zum einen dadurch, dass erfindungsgemäß die Rastverbindung auf die Innenseite der Nuten verlegt ist, erreicht, dass die Rastverbindungszonen durch die die Nuten nach außen begrenzenden Wandabschnitten der Paneele gegen eine unmittelbare Einwirkung der Hitze eines Feuers abgeschirmt sind.

Zum anderen wird dadurch, dass sowohl die Vorsprünge als auch die Nut jeweils mit Blechmaterial bekleidet sind und im Bereich der Verrastungszone jeweils Blech auf Blech liegt, sichergestellt, dass das Material des Dämmkerns nicht in direkten Kontakt mit der Hitze eines Feuers kommt. Stattdessen bleibt der Dämmkern nicht nur im Bereich der Paneele selbst, sondern auch im Bereich der Fügezone dauerhaft fest umschlossen, so dass seine Barrierewirkung unter der Brandhitze sicher aufrechterhalten bleibt.

Des Weiteren erlaubt die erfindungsgemäße Auskleidung der Nuten bzw. Ummantelung der Vorsprünge mit Blechmaterial der Deckschalen und der damit einhergehend erhöhten Biegesteifigkeit der Vorsprünge sowie verbesserten Lastaufnahmevermögens der Seitenwände der Nuten die Erzeugung und Aufrechterhaltung erhöhter Anpresskräfte im Bereich der Rastverbindung. Diese stellen sicher, dass die Rastverbindung auch dann noch über eine ausreichend lange Zeit dicht bleibt, wenn die Fügezone zwischen zwei Paneelen starker Hitzebelastung und damit einhergehender Gefahr von Verformungen ausgesetzt ist.

Neben der durch die Erfindung ermöglichten deutlichen Erhöhung der feuerhemmenden Wirkung erfindungsgemäßer Paneele bzw. daraus zusammengesetzter Bauwerksteile besteht ein wesentlicher Vorteil der Erfindung darin, dass der Zusammenbau eines erfindungsgemäßen Bauwerksteils unverändert einfach vorgenommen werden kann. Darüber hinaus zeichnet sich ein erfindungsgemäßes Paneel durch eine besonders einfache Gestaltung und eine ebenso einfache Herstellbarkeit aus. Insbesondere sind keine umständlich zu montierenden zusätzlichen Bauteile erforderlich, um aus erfindungsgemäßen Paneelen eine Wand oder eine Decke zu errichten, die auch strengste Anforderung an die Feuerhemmung erfüllen.

Die Tatsache, dass für die erfindungsgemäße Beblechung der Nuten und Vorsprünge das Blechmaterial der ohnehin vorhandenen Deckschalen genutzt wird, ermöglicht es darüber hinaus, erfindungsgemäß gestaltete Paneele auf einfache Weise großtechnisch zu produzieren. Entsprechend dem erfindungsgemäßen Verfahren lassen sich die dazu erforderlichen Arbeitschritte sämtlich im kontinuierlichen Durchlauf und vollautomatisiert absolvieren, so dass nicht nur die Material-, sondern auch die mit der Herstellung erfindungsgemäßer Paneele verbundenen Kosten auf ein Minimum reduziert sind.

Als Rastformelement kann entsprechend den aus dem Stand der Technik bekannten Möglichkeiten an den Rastvorsprüngen beispielsweise eine Auswölbung vorhanden sein, die sich über eine ausreichende Höhe über die Seitenflächen des jeweiligen Rastvorsprungs erhebt. In diesem Fall könnten im Bereich der Nuten als Rastelemente entsprechend geformte Einsenkungen, in die die Auswölbungen der Rastvorsprünge in der Montagestellung greifen, oder ebenfalls Auswölbungen vorhanden sein, die in Montagestellung von den ausgewölbten Rastformelementen der Rastvorsprünge hintergriffen werden. Genauso können im Sinne einer kinematischen Umkehr die Auswölbungen den Nuten und die korrespondierenden Einsenkungen den Rastvorsprüngen zugeordnet werden.

Gemäß einer vorteilhaften Ausgestaltung der Erfindung sind die Kontaktflächen der Raste der Vorsprünge und die Kontaktflächen der Raste der Nut im Querschnitt gesehen abgerundet. Auf diese Weise wird einerseits eine optimal große Kontaktfläche zwischen dem Rastformelement des jeweiligen Vorsprungs und des korrespondierenden Rastformelements der Nut hergestellt. Andererseits erlaubt diese Formgebung für den Fall einer Demontage der in erfindungsgemäßer Weise errichteten Wand oder Decke ein einfaches Lösen der Paneele ohne die Gefahr einer Beschädigung der für die formschlüssige Verbindung zweier Paneele erforderlichen Formelemente.

Eine weiter erhöhte Sicherheit gegen das Durchtreten von Feuer durch die Fügezonen einer erfindungsgemäß beschaffenen Bauwerkswand lässt sich dadurch erreichen, dass bei einem für den Aufbau eines solchen Bauwerksteils verwendeten erfindungsgemäßen Paneel im Querschnitt gesehen das Blech der Deckschalen jeweils über die der jeweiligen Deckschale zugeordnete Nut hinaus in Richtung der jeweils gegenüberliegenden Außenseite des Paneels geführt ist. Durch den über die Nut hinaus zur Mitte der Dicke des Paneels geführten Blechabschnitt wird ein zusätzlicher Schutz des Dämmkerns erreicht. Dasselbe gilt, wenn in entsprechender Weise im Querschnitt gesehen das Blech der Deckschalen jeweils über den der jeweiligen Deckschale zugeordneten Rastvorsprung hinaus in Richtung der jeweils gegenüberliegenden Außenseite des Paneels geführt ist.

Unterstützt werden kann die feuerhemmende Wirkung einer unter Verwendung erfindungsgemäßer Paneele ausgebildeten Verbindung zwischen den Paneelen eines erfindungsgemäßen Bauwerksteils dadurch, dass die Innenlängsseite der Nuten jeweils in einen nach außen gegenüber der jeweiligen Schmalseite des Paneels vorgewölbten Vorsprung übergeht. Die auf diese Weise an der jeweiligen Schmalseite erfindungsgemäßer Paneele gebildeten Vorsprünge bilden nach der Montage eine zusätzliche Sperre gegen das Durchdringen von Hitze durch die Fügezone und erhöhen gleichzeitig die Sicherheit der Abdichtung des Dämmkerns.

Letzteres gilt insbesondere dann, wenn die Deckschalen jeweils einen sich an ihren den jeweiligen Rastvorsprung abdeckenden Abschnitt anschließenden Abschnitt aufweisen, dessen Breite der Breite des Vorsprungs entspricht, in den die Längsseiten der Nuten des Paneels jeweils übergehen. In diesem Fall ist auch im Bereich der zusätzlichen Vorsprünge gezielt eine formschlüssige Verbindung zwischen den im Montagezustand dicht nebeneinander positionierten Paneelen hergestellt.

Die auch unter Hitzeeinwirkung dauerhaft feste Verbindung der Deckschalen mit dem Dämmkern der Paneelen kann erfindungsgemäß zudem dadurch weiter verbessert werden, dass der den jeweiligen Rastvorsprung bzw. die jeweilige Nut abdeckende Schenkel der jeweiligen Deckschale sich in den Dämmkern hinein erstreckt.

Wie beim Stand der Technik ist es auch bei einem erfindungsgemäßen Paneel im Hinblick auf die Vermeidung von Wärmebrücken günstig, wenn an seinen mit den Rastvorsprüngen bzw. den Nuten versehenen Schmalseiten jeweils ein Mittelabschnitt vorhanden ist, an dem der Dämmkern frei liegt. Dieser Mittelabschnitt wird dabei bevorzugt jeweils so ausgeformt, dass er in Montagestellung unmittelbar am entsprechenden Mittelabschnitt des nächstbenachbart stehenden Paneels anliegt. Zu diesem Zweck können die im montierten Zustand einander zugeordneten Mittelabschnitte als Vorsprünge bzw. dazu korrespondierende Einsenkungen ausgebildet sein, um auch im Bereich der Mittelabschnitte einen Formschluss erzeugen zu können.

Besonders sicher kann der weitestgehende unterbrechungsfreie Übergang zwischen den Dämmkernen der einzelnen Paneele eines erfindungsgemäß beschaffenen Bauwerksteils dabei dann sein, wenn die Lage und Form der Mittelabschnitte der Schmalseiten des Paneels derart aneinander angepasst sind, dass in Montagestellung der jeweilige Mittelabschnitt des Paneels unter einem Anpressdruck an der ihm zugeordneten Schmalseite eines gleichartig geformten, dicht an das erste Paneel gesetzten zweiten Paneels anliegt.

Grundsätzlich ist es denkbar, ein erfindungsgemäßes Bauwerksteil aus nur zwei Paneelen zusammenzusetzen. In diesem Fall ist es ausreichend, wenn lediglich an einer Schmalseite eines der Paneele in erfindungsgemäßer Weise ausgebildete Rastvorsprünge und an einer Schmalseite des anderen Paneels entsprechend erfindungsgemäß geformte Nuten vorhanden sind, während die jeweils andere Schmalseite der Paneele beispielsweise für den Anschluss an ein gemauertes Wand- oder Deckenteil ausgebildet ist.

Genauso kann es zweckmäßig sein, bei einem aus erfindungsgemäßen Paneelen gebildeten Bauwerksteil an den die jeweiligen Endstücke bildenden Paneelen lediglich eine Schmalseite mit erfindungsgemäß ausgebildeten Rastvorsprüngen bzw. Nuten zu versehen, um mit der jeweils anderen Schmalseite auf einfache Weise einen Anschluss an weitere Bauelemente oder Bauwerksteile bewerkstelligen zu können.

Wie bereits erwähnt, besteht ein besonderer Vorteil der Erfindung in der Einfachheit, mit der sich erfindungsgemäße Profile herstellen lassen. So lassen sich erfindungsgemäße Profile großtechnisch in einem vollautomatisierten Prozess herstellen, dessen einzelne Arbeitsschritte im kontinuierlichen Durchlauf absolviert werden können. Insbesondere lassen sich die bei der Herstellung erfindungsgemäßer Paneele erforderlichen einzelnen Arbeitschritte unterbrechungsfrei aufeinander folgend absolvieren.

Zur Herstellung der Deckschalen eignen sich insbesondere aus Stahl gewalzte Bänder.

Nachfolgend wird die Erfindung anhand einer ein Ausführungsbeispiel darstellenden Zeichnung näher erläutert. Es zeigen jeweils schematisch:
- Fig. 1: ein Wandpaneel in einem Querschnitt;
- Fig. 2: die seitlichen Endabschnitte von zwei Wandelementen in einem der Fig. 1 entsprechenden Schnitt vor dem Zusammenbau zu einer Wand;
- Fig. 3: die in Fig. 2 dargestellten Endabschnitte zu Beginn des Fügevorgangs;
- Fig. 4: die in den Figuren 2 und 3 dargestellten Endabschnitte nach Abschluss des Fügevorgangs;
- Fig. 5: die zwischen den beiden Endabschnitten hergestellte Fügezone in einer Fig. 4 entsprechenden, vergrößerten Darstellung;
- Fig. 6: eine Linie zur Produktion von Wandpaneelen der in den Figuren 1 bis 5 dargestellten Art.

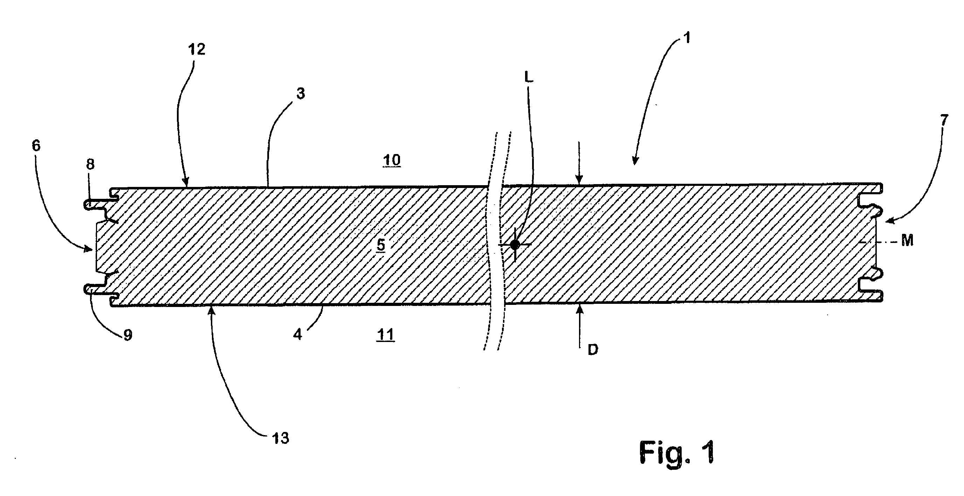

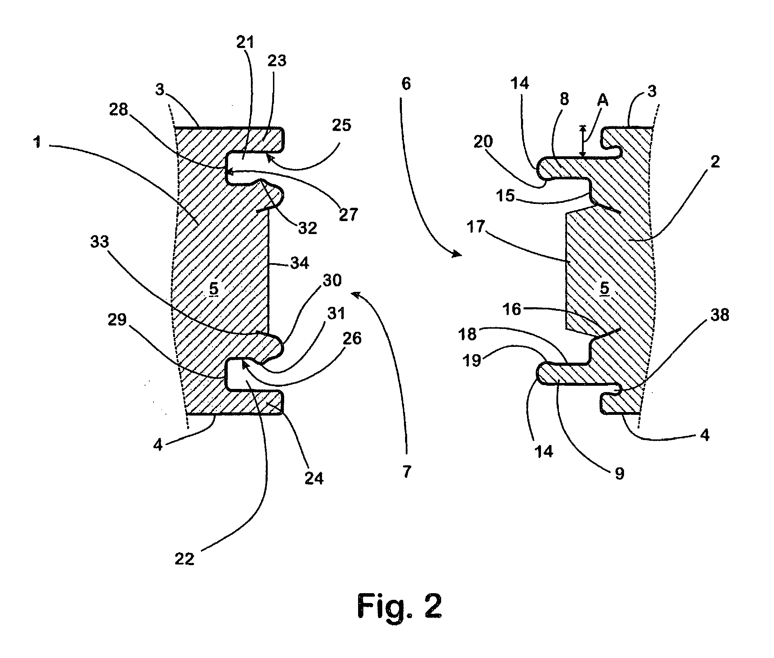

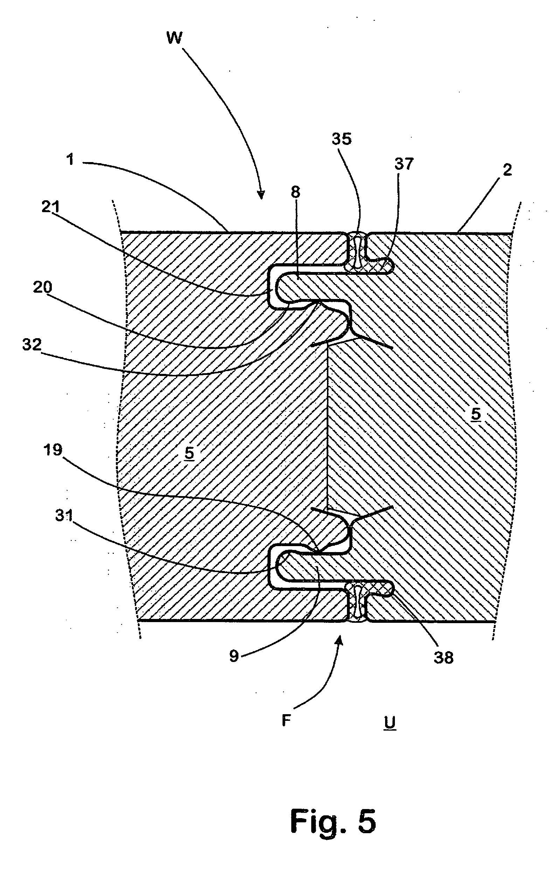

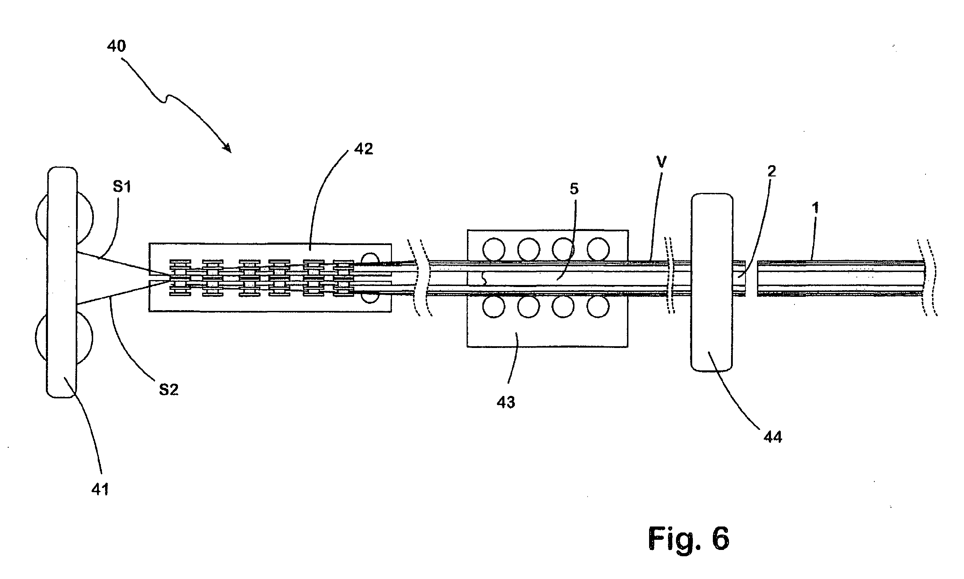

Die in den Figuren 1 bis 6 gezeigten Wandpaneele 1,2 weisen jeweils zwei aus Stahlblech gefertigte Deckschalen 3,4 auf, zwischen denen jeweils ein mit den Deckschalen 3,4 form- und stoffschlüssig verbundener, aus einem Polyurethan-Werkstoff bestehender Dämmkern 5 angeordnet ist.

An der ersten ihrer sich achsparallel zu ihrer Längsachse L erstreckenden Schmalseite 6,7 weisen die Wandpaneele 1,2 jeweils zwei sich im Wesentlichen über ihre gesamte Höhe erstreckende Rastvorsprünge 8,9 auf, die im in den Figuren 1 bis 5 dargestellten Querschnitt gesehen jeweils zungenartig ausgebildet sind und von der Schmalseite 6 im Wesentlichen gerade abstehen. Der eine Rastvorsprung 8 ist der einen Außenseite 10 der Wandpaneele 1,2 zugeordnet, während der andere Rastvorsprung 9 nahe der anderen Außenseite 11 der Wandpaneele 1,2 positioniert ist. Die Rastvorsprünge 8,9 sind dabei um jeweils einen Abstand A in Richtung der Mitte M der Dicke D des jeweiligen Wandpaneels 1,2 gegenüber der jeweiligen Außenfläche 12,13 versetzt angeordnet.

Die Außenflächen der Rastvorsprünge 8,9 sind von einem entsprechend geformten Abschnitt 14 der Deckschalen 3,4 bedeckt. Das von dem jeweiligen Abschnitt 14 umgrenzte, von den Rastvorsprüngen 8,9 eingenommene Raumvolumen ist dementsprechend mit Material des Dämmkerns 5 gefüllt. An den die Rastvorsprünge 8,9 abdeckenden Abschnitt 14 schließt sich ein weiterer Abschnitt 15 der Deckschalen 3,4 an, der unter Ausbildung eines Absatzes im Wesentlichen rechtwinklig zur jeweiligen Außenfläche 12,13 ausgerichtet über einen Teilbetrag der Dicke D in Richtung der Mitte M des jeweiligen Wandpaneels 1,2 geführt ist. Dieser Abschnitt 15 geht jeweils in einen Schenkel 16 der Deckschalen 3,4 über, der unter einem stumpfen Winkel in Richtung der Längsachse L in den Dämmkern 5 greift.

Der Dämmkern 5 weist an der Schmalseite 6 gleichzeitig einen Mittelabschnitt 17 auf, der nach Art eines Vorsprungs gegenüber dem Absatz-Abschnitt 15 der Deckschalen 3,4 vorsteht, wobei die Höhe des Mittelabschnitts 17 kleiner ist als die Höhe, über die die Rastvorsprünge 8,9 frei vorstehen.

Im Bereich des freien Endes der Rastvorsprünge 8,9 ist an deren zur Mitte M weisenden Innenfläche 18 jeweils eine als Rastformelement 19,20 dienende Auswölbung ausgebildet, die in weichen, abgerundeten Übergängen in die angrenzenden Abschnitte der Rastvorsprünge 8,9 übergehen.

An der der Schmalseite 6 gegenüberliegenden Schmalseite 7 der Wandpaneele 1,2 sind jeweils zwei Nuten 21,22 eingeformt, die sich wie die Rastvorsprünge 8,9 im Wesentlichen über die gesamte Höhe der Wandpaneele 1,2 erstrecken. Die erste Nut 21 ist dabei der Außenseite 10 und die zweite Nut 22 der Außenseite 11 der Wandpaneele 1,2 zugeordnet. An ihren jeweils äußeren Seiten sind die Nuten 21,22 jeweils durch einen Wandabschnitt 23,24 begrenzt, dessen Außenfläche bündig zur jeweiligen Außenfläche 12,13 der Wandpaneele 1,2 ausgerichtet ist. Die Dicke der Wandabschnitte 23,24 ist dabei um ein geringes Untermaß geringer als der Abstand A, um den die Rastvorsprünge 8,9 gegenüber den Außenflächen 12,13 der Wandpaneele 1,2 versetzt angeordnet sind.

Die Nuten 21,22 sind jeweils von einer der jeweiligen Außenfläche 12,13 zugeordneten Außenlängsseite 25, einer der Mitte M des Wandpaneels 1,2 zugeordneten Innenlängsseite 26 und eine die die Innenlängsseite 26 und die Außenlängsseite 25 verbindende Grundfläche 27 umgrenzt. Die Außenlängsseite 25, die Grundfläche 27 und die Innenlängsseite 26 sind dabei jeweils von einem entsprechend geformten Abschnitt 28,29 der jeweiligen Deckschale 3 bzw. 4 bedeckt.

An den jeweiligen Abschnitt 28,29 schließt sich jeweils ein weiterer Abschnitt 30 der Deckschalen 3,4 an. Dieser ist nach Art eines Vorsprungs vorgewölbt und erstreckt sich ebenfalls über die Höhe der Wandpaneele 1,2.

Im Bereich des Übergangs vom Abschnitt 28,29 zum jeweiligen Vorsprung-Abschnitt 30 ist an den Innenlängsseiten 26 der Nuten 21,22 jeweils ein Rastformelement 31,32 in Form einer sich über die Höhe der Wandpaneele 1,2 erstreckenden Auswölbung geformt, die in einem abgerundeten weichen Übergang in die Abschnitte 28, 29 bzw..30 der Deckschalen 1,2 übergeht.

An den jeweiligen Vorsprung-Abschnitt 30 schließt sich schließlich jeweils ein Schenkel 33 der Deckschalen 3,4 an, der unter einem Winkel in Richtung der Längsachse L in den Dämmkern greift.

Auf der mit den Nuten 21,22 versehenen Schmalseite 7 weist der Dämmkern 5 einen von Blechmaterial unbedeckten, ebenen Mittelabschnitt 34 auf, der seitlich durch die Vorsprung-Abschnitte 30 begrenzt ist.

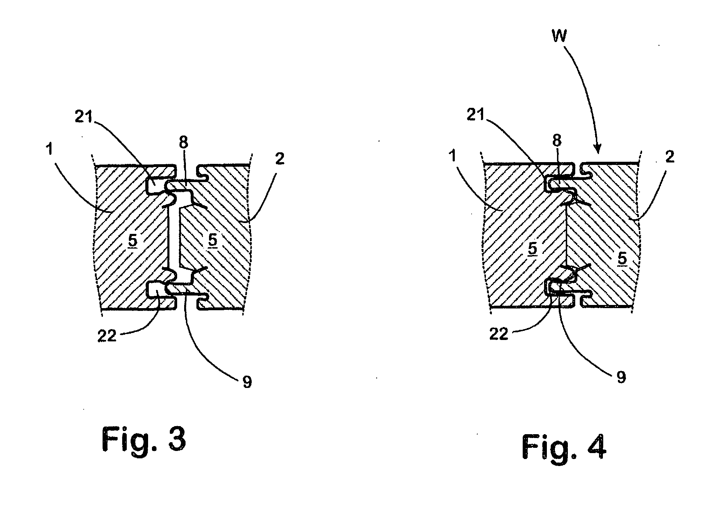

Beim Zusammenfügen der Wandpaneele 1,2 zu der in Fig. 4 ausschnittsweise dargestellten Wand W (Bauwerksteil) werden die Rastvorsprünge 8,9 des zweiten Wandpaneels 2 in die Nuten 21,22 des ersten Wandpaneels 1 eingeführt. Sie treffen dabei mit ihren Rastformelementen 19,20 auf die Rastformelemente 31,32 der jeweiligen Nut 21,22, so dass sie leicht in Richtung der jeweiligen Außenseite 10,11 der Wandpaneele 1,2 gebogen werden. Im Zuge des weiteren Einschiebens überwinden die Rastvorsprünge 8,9 die Rastformelemente 31,32, so dass ihre Rastformelemente 19,20 unter leichter, jedoch ausreichender Vorspannung an der ihnen jeweils zugeordneten Längsinnenseite 26 der Nuten 21 bzw. 22 anliegen.

Gleichzeitig liegen die einander zugeordneten Mittelabschnitte 17 und 34 der Dämmkerne 5 der Wandpaneele 1,2 dicht aneinander an. Zwischen den Mittelabschnitten 17,34 kann dabei eine Pressung herrschen, die abhängig ist vom Übermaß der Höhe des Mittelabschnitts 17 gegenüber der Höhe der durch die Abschnitte 30 gebildeten Vorsprünge, die in Montagestellung gegen die ihnen jeweils zugeordneten Abschnitte 15 der Deckschalen 1,2 drücken.

Zur Verbesserung der Wärmedämmung und als zusätzliche Dampfsperre können in die zwischen den Wandpaneelen 1,2 in Montagestellung gebildete Fügezone F Dichtungen 35,36 in Form von Dichtungsstreifen eingelegt werden, durch die die Fügezone F nach dem in der DE 81 08 886 U1 beschriebenen Vorbild gegenüber der Umgebung U abgedeckt ist. Zu diesem Zweck kann in Richtung der jeweiligen Außenseite 10,11 seitlich der Rastvorsprünge 8,9 in die Schmalseite 6 jeweils eine Nut 38 eingeformt sein, in die eine an den jeweiligen Dichtungsstreifen angeformte Befestigungslippe 37 greift und deren Seitenflächen ebenfalls vom Blechmaterial der jeweiligen Deckschale 3,4 abgedeckt sind.

Zur Herstellung der Wandpaneele 1,2 werden in einer vollautomatisierten Fertigungslinie 40 von einer Abhaspeleinrichtung 41 zwei kaltgewalzte Stahlbänder S1,S2 einer Profiliereinrichtung 42 zugeführt.

In der Profiliereinrichtung 42 wird aus dem Stahlband S1 ein Endlosprofil P1 geformt, dessen Form im Wesentlichen der Form der ersten Deckschale 3 entspricht. In gleicher Weise wird in der Profiliereinrichtung 42 aus dem Stahlband S2 ein Endlosprofil P2 geformt, dessen Form im Wesentlichen der Form der zweiten Deckschale 4 der Wandpaneele 1 bzw. 2 entspricht.

Die Endlosprofile P1,P2 verlassen die Profiliereinrichtung 42 derart ausgerichtet, dass ihre den anschließenden zu erzeugenden Dämmkern 5 der fertigen Wandpaneele 1,2 an seiner Außenseite bedeckenden Wandflächen einander zugeordnet sind, wobei der Abstand der Endlosprofile der Dicke des zu erzeugenden Dämmkerns 5 entspricht.

Anschließend werden die Endlosprofile P1,P2 unterbrechungsfrei in eine Einrichtung 43 geleitet, in der ebenfalls in einem kontinuierlich ablaufenden Vorgang ein Dämmwerkstoff in Form eines fließfähigen, zunächst selbsttätig expandierenden und dann aushärtenden Schaums in den von den Endlosprofilen P1,P2 umgrenzten Raum eingebracht wird. Durch entsprechende Niederhalter wird dabei sichergestellt, dass die Endlosprofile P1, P2 ihre die Form der fertigen Paneele 1,2 bestimmende Formgebung beibehalten. Beim Verlassen der Einrichtung 43 ist das Dämmmaterial des Dämmkerns 5 weitestgehend ausgehärtet.

Nach der Einrichtung 43 läuft der aus den Endlosprofilen P1,P2 und dem Dämmkern 5 gebildete Endlosverbund V in eine Längsteileinrichtung 44 ein, in der die Wandpaneele 1,2 von ihm abgelängt werden.

| **BEZUGSZEICHEN** | |
|---|---|
| 1, 2 | Wandpaneele |
| 3, 4 | Deckschalen |
| 5 | Dämmkern |
| 6,7 | Schmalseiten der Wandpaneele |
| 8, 9 | Rastvorsprünge |
| 10, 11 | Außenseiten der Wandpaneele 1,2 |
| 12, 13 | Außenfläche der Wandpaneele 1,2 |
| 14 | jeweiliger die Rastvorsprünge 8,9 bedeckender Abschnitt der Deckschalen 3,4 |
| 15 | sich an den Abschnitt 14 anschließender Abschnitt der Deckschalen 3,4 |
| 16 | sich an den Abschnitt 15 anschließender Schenkel der Deckschalen 3, 4 |
| 17 | Mittelabschnitt des Dämmkerns 5 |
| 18 | Innenfläche der Rastvorsprünge 8,9 |
| 19, 20 | Rastformelemente |
| 21, 22 | Nuten |
| 23, 24 | die jeweilige Nut 21,22 außen begrenzende Wandabschnitte |
| 25 | Außenlängsseiten der Nuten 21,22 |
| 26 | Innenlängsseite der Nuten 21,22 |
| 27 | Grundfläche der Nuten 21,22 |
| 28, 29 | die Außenlängsseite 25, die Grundfläche 27 und die Innenlängsseite der Nuten 21,22 jeweils bedeckender Abschnitt der Deckschalen 3,4 |
| 30 | einen Vorsprung bildender, sich an den jeweiligen Abschnitt 28,29 anschließender Abschnitt der Deckschalen 3, 4 |
| 31, 32 | Rastformelemente |
| 33 | Schenkel der Deckschalen 3, 4 |
| 34 | Mittelabschnitt des Dämmkerns 5 |
| 35, 36 | Dichtungen |
| 37 | Befestigungslippe der Dichtungen 35,36 |
| 38 | Nut |
| 40 | Fertigungslinie |
| 41 | Abhaspeleinrichtung |
| 42 | Profiliereinrichtung |
| 43 | Einrichtung zum Einbringen des Dämmkerns 5 |
| 44 | Längsteileinrichtung |
| A | Abstand, um den die Rastvorsprünge 8,9 in Richtung der Mitte M der Dicke D des jeweiligen Wandpaneels 1,2 gegenüber der jeweiligen Außenfläche 12,13 versetzt angeordnet sind |
| D | Dicke des jeweiligen Wandpaneels 1,2 |
| L | Längsachse der Wandpaneele 1,2 |
| M | Mitte der Dicke D des jeweiligen Wandpaneels 1,2 |
| F | Fügezone |
| P1, P2 | Endlosprofile |
| S1, S2 | Stahlbänder |
| U | Umgebung |
| V | Endlosverbund |
| W | Wand |

## Patentansprüche

1. Paneel zum Bau einer Wand oder einer Decke eines Bauwerks,
- mit einem aus einem wärmedämmenden Werkstoff gebildeten Dämmkern (5) und
- mit den Dämmkern (5) auf seinen Außenseiten mindestens teilweise abdeckenden Deckschalen (3,4), die aus einem Blechmaterial (S1,S2) vorgefertigt sind,
- wobei an einer ersten Schmalseite (6) des Paneels (1,2) zwei jeweils ein Rastformelement (19,20) tragende, mit Material des Dämmkerns gefüllte Rastvorsprünge (8,9) ausgebildet sind, von denen jeweils einer einer der Außenseiten (10,11) des Paneels (1,2) zugeordnet ist und die vom Blechmaterial der der jeweiligen Außenseite (10,11) des Paneels (1,2) zugeordneten Deckschale (3,4) umgrenzt sind, und
- wobei an der der ersten Schmalseite (6) gegenüberliegenden Schmalseite (7) des Paneels (1,2) benachbart zu jeder der Außenfläche (12,13) des Paneels (1,2) jeweils eine Nut (21,22) eingeformt ist, die seitlich durch eine der jeweiligen Außenseite (10, 11) des Paneels (1,2) zugeordnete Außenlängsseite (25) und eine der betreffenden Außenlängsseite (25) gegenüberliegend angeordnete Innenlängsseite (26) sowie eine die Außenlängsseite (25) und die Innenlängsseite (26) verbindende Grundfläche (27) umgrenzt und derart an die Form und Lage der Rastvorsprünge (8,9) des Paneels (1,2) angepasst ist, dass im Montagezustand die Rastvorsprünge (8,9) des Paneels (1,2) formschlüssig in jeweils eine korrespondierende Nut (21,22) eines gleichartig geformten, dicht an das erste Paneel (2) gesetzten zweiten Paneels (1) greifen können, **dadurch gekennzeichnet,**
- **dass** die Außenlängsseite (25), die Innenlängsseite (26) und die Grundfläche (27) der Nuten (21,22) von Blechmaterial der der jeweiligen Außenseite (10,11) zugeordneten Deckschale (3,4) bedeckt sind,
- **dass** das von den Rastvorsprüngen (8,9) jeweils getragene Rastformelement (19,20) jeweils an der Seite (18) des jeweiligen Rastvorsprungs (8,9) angeordnet ist, die der Innenlängsseite (26) der zum jeweiligen Rastvorsprung (8,9) korrespondierenden Nut (21,22) zugeordnet ist,
- **dass** die Nuten (21,22) an ihren jeweils äußeren Seiten jeweils durch einen Wandabschnitt (23,24) begrenzt sind, dessen Außenfläche bündig zur jeweiligen Außenfläche (12, 13) der Wandpaneele (1,2) ausgerichtet ist, und dass die Dicke der mit dem Blechmaterial der jeweiligen Deckschale (3,4) bedeckten Wandabschnitte (23,24) des Paneels (1,2) jeweils um ein geringes Untermaß geringer ist als der Abstand (A), um den die Rastvorsprünge (8,9) gegenüber den Außenflächen (12,13) der Paneele (1,2) versetzt angeordnet sind und
- **dass** an den Innenlängsseiten (26) der Nuten (21,22) jeweils ein Rastformelement (31,32) derart ausgebildet und angeordnet ist, dass im Montagezustand die in die Nuten (21,22) eingreifenden Rastvorsprünge (8,9) des zweiten Paneels (1) über ihr jeweiliges Rastformelement (19,20) federnd elastisch mit dem an der Innenlängsseite (26) der ihnen jeweils zugeordneten Nut (21,22) des Paneels (1,2) vorhandenen Rastformelement (31,32) verrastbar sind, so dass die Rastvorsprünge (8,9) mit ihren Rastformelementen (31,32) im montierten Zustand mit einer Vorspannung an der Innenlängsseite (26) der ihnen jeweils zugeordneten Nut (21,22) anliegen.

2. Paneel nach Anspruch 1, **dadurch gekennzeichnet, dass** die Kontaktflächen des Rastformelements (19,20) der Rastvorsprünge (8,9) und die Kontaktflächen des Rastformelements (31,32) der zugeordneten Nut (21, 22) im Querschnitt gesehen so abgerundet sind, dass die im Montagezustand zwischen dem jeweiligen Rastformelement (19,20) der Rastvorsprünge (8,9) und dem Rastformelement (31,32) der dem jeweiligen Rastvorsprung (8,9) zugeordneten Nut (21,22) gebildete Verrastung lösbar ist.

3. Paneel nach einem der voranstehenden Ansprüche, **dadurch gekennzeichnet, dass** im Querschnitt gesehen das Blech der Deckschale (3,4) jeweils über die dieser Deckschale (3,4) zugeordnete Nut (21,22) hinaus in Richtung der jeweils gegenüberliegenden Außenseite (10,11) des Paneels (1,2) geführt ist.

4. Paneel nach Anspruch 3, **dadurch gekennzeichnet, dass** die Innenlängsseite (26) der Nuten (21,22) jeweils in einen nach außen gegenüber der jeweiligen Schmalseite (7) des Paneels (1,2) vorgewölbten Vorsprung (30) übergeht.

5. Paneel nach Anspruch 4, **dadurch gekennzeichnet, dass** sich der Schenkel der jeweiligen Deckschale (3,4), der sich an den den jeweiligen Vorsprung (30) bedeckenden Abschnitt (33) der Deckschale (3,4) anschließt, in den Dämmkern (5) hinein erstreckt.

6. Paneel nach einem der voranstehenden Ansprüche, **dadurch gekennzeichnet**, d a s s im Querschnitt gesehen das Blech der Deckschalen (3,4) jeweils über den der jeweiligen Deckschale (3,4) zugeordneten Rastvorsprung (8,9) hinaus in Richtung der jeweils gegenüberliegenden Außenseite (10,11) des Paneels (1,2) geführt ist.

7. Paneel nach Anspruch 6 und einem der Ansprüche 4 oder 5, **dadurch gekennzeichnet**, d a s s die Deckschalen (3,4) jeweils einen sich an ihren den jeweiligen Rastvorsprung (8,9) abdeckenden Abschnitt (14) anschließenden Abschnitt (15) aufweisen, dessen Breite der Breite des Vorsprungs (30) entspricht, in den die Längsseiten (26) der Nuten (21,22) des Paneels (1,2) jeweils übergehen.

8. Paneel nach einem der Ansprüche 6 oder 7, **dadurch gekennzeichnet, dass** die Deckschalen (3,4) mit ihren den jeweiligen Rastvorsprung (8,9) abdeckenden Abschnitten (14) jeweils in einem Schenkel (16) enden, der sich in den Dämmkern (5) hinein erstreckt.

9. Paneel nach einem der voranstehenden Ansprüche,
**dadurch gekennzeichnet, dass** an seiner mit den Rastvorsprüngen (8,9) versehenen ersten Schmalseite (6) ein Mittelabschnitt (17) vorhanden ist, an dem der Dämmkern (5) freiliegt.

10. Paneel nach einem der voranstehenden Ansprüche,
**dadurch gekennzeichnet, dass** an seiner mit den Nuten (21,22) versehenen zweiten Schmalseite (7) ein Mittelabschnitt (34) vorhanden ist, an dem der Dämmkern (5) freiliegt.

11. Paneel nach Anspruch 10, **dadurch gekennzeichnet, dass** der Mittelabschnitt (34) gegenüber dem freien Ende der die Nuten (21,22) der jeweiligen Außenseite (10,11) des Paneels (1,2) begrenzenden Wandabschnitte (23,24) zurückversetzt ist.

12. Paneel nach einem der Ansprüche 9 bis 11,
**dadurch gekennzeichnet, dass** die Lage und Form der Mittelabschnitte (17,34) der Schmalseiten (6,7) des Paneels (1,2) derart aneinander angepasst sind, dass in Montagestellung der jeweilige Mittelabschnitt (17,34) des Paneels (1,2) unter einem Anpressdruck an der ihm zugeordneten Schmalseite (6,7) eines gleichartig geformten, dicht an das erste Paneel (1,2) gesetzten zweiten Paneels (1,2) anliegt.

13. Flächiges Bauwerksteil, wie Wand oder Decke, zusammengesetzt aus mindestens zwei Paneelen (1,2), die
- einen aus einem wärmedämmenden Werkstoff gebildeten Dämmkern (5) und
- den Dämmkern (5) auf seinen Außenseiten mindestens teilweise abdeckenden Deckschalen (3,4) aufweisen, die aus einem Blechmaterial vorgefertigt sind,
- wobei an einer Schmalseite des zweiten Paneels (2) zwei jeweils ein Rastformelement (19,20) tragende, mit Material des Dämmkerns (5) gefüllte Rastvorsprünge (8,9) ausgebildet sind, von denen jeweils einer einer der Außenseiten (10,11) des zweiten Paneels (2) zugeordnet ist und die vom Blechmaterial der der jeweiligen Außenseite (10,11) des zweiten Paneels (2) zugeordneten Deckschale (3,4) umgrenzt sind, und
- wobei an der der mit den Rastvorsprüngen (8,9) versehenen Schmalseite (6) des zweiten Paneels (2) zugeordneten Schmalseite (7) des ersten Paneels (1) benachbart zu jeder der Außenflächen (12,13) des Paneels (1) des ersten Paneels (1) jeweils eine Nut (21,22) eingeformt ist, die seitlich durch eine der jeweiligen Außenseite (10,11) des ersten Paneels (1) zugeordnete Außenlängsseite (25) und eine zur betreffenden Außenlängsseite (25) gegenüberliegend angeordnete Innenlängsseite (26) sowie eine die Außenlängsseite (25) und die Innenlängsseite (26) verbindende Grundfläche (27) umgrenzt und derart an die Form und Lage der Rastvorsprünge (8,9) des zweiten Paneels (2) angepasst ist, dass die Rastvorsprünge (8,9) des zweiten Paneels (2) formschlüssig in die ihnen jeweils zugeordnete korrespondierende Nut (21,22) des ersten Paneels (1) greifen, **dadurch gekennzeichnet,**
- **dass** die Außenlängsseite (25), die Innenlängsseite (26) und die Grundfläche (27) der Nuten (21,22) des ersten Paneels (1) von Blechmaterial der der jeweiligen Außenseite (10,11) zugeordneten Deckschale (3,4) des ersten Paneels (1) bedeckt sind,
- **dass** das von den Rastvorsprüngen (8,9) des zweiten Paneels (2) jeweils getragene Rastformelement (19,20) jeweils an der Seite des jeweiligen Rastvorsprungs (8,9) angeordnet ist, die der Innenlängsseite (26) der zum jeweiligen Rastvorsprung (8,9) korrespondierenden Nut (21,22) zugeordnet ist,
- **dass** die Nuten (21,22) an ihren jeweils äußeren Seiten jeweils durch einen Wandabschnitt (23;24) begrenzt sind, dessen Außenfläche bündig zur jeweiligen Außenfläche (12, 13) der.Wandpaneele (1,2) ausgerichtet ist, und dass die Dicke der mit dem Blechmaterial der jeweiligen Deckschale (3,4) bedeckten Wandabschnitte (23,24) des Paneels (1,2) jeweils um ein geringes Untermaß geringer ist als der Abstand (A), um den die Rastvorsprünge (8,9) gegenüber den Außenflächen (12,13) der Paneele (1,2) versetzt angeordnet sind, und
- **dass** an den Innenlängsseiten (26) der Nuten (21,22) des ersten Paneels (1) jeweils ein Rastformelement (31,32) derart ausgebildet und angeordnet ist, dass die in die Nuten (21,22) des ersten Paneels (1) eingreifenden Rastvorsprünge (8,9) des zweiten Paneels (2) über ihr jeweiliges Rastformelement (19,20) federnd elastisch mit dem an der Innenlängsseite (26) der ihnen jeweils zugeordneten Nut (21,22) des ersten Paneels (1) vorhandenen Rastformelement (31,32) verrastbar sind, so dass die Rastvorsprünge (8,9) mit ihren Rastformelementen (31,32) im montierten Zustand mit einer Vorspannung an der Innenlängsseite (26) der ihnen jeweils zugeordneten Nut (21, 22) anliegen.

14. Bauwerksteil nach Anspruch 13, **dadurch gekennzeichnet**, das s die Paneele (1,2) gemäß einem der Ansprüche 1 bis 12 ausgebildet sind.

15. Bauwerksteil nach einem der Ansprüche 13 oder 14, **dadurch gekennzeichnet, dass** zwischen den Paneelen (21,22) jeweils eine Dichtung (35,36) angeordnet ist, die die zwischen den Paneelen (1,2) erzeugte Fügezone (F) gegenüber der Umgebung (U) des Bauwerksteils (W) abdeckt.

## Claims

1. A panel for constructing a wall or a ceiling of a construction,
- having an insulation core (5) formed of a thermally insulating construction material and
- having face sheets (3, 4) prefabricated from a sheet metal (S1, S2) at least partially covering the insulation core (5) on its outer faces
- wherein at one first narrow side (6) of said panel (1, 2) two engaging protrusions (8, 9) filled with material of the insulation core are formed each supporting an engaging shaped element (19, 20), each of the engaging protrusions being alotted to one of the outer faces (10, 11) of said panel (1, 2) and being enclosed by the sheet metal of said face sheet (3, 4), which is related to the respective outer face (10, 11) of said panel (1, 2), and
wherein a groove (21, 22) is formed into each narrow side (7) of said panel (1, 2) opposing said first narrow side (6), wherein the groove is formed adjacent to each of the outer faces (12, 13) of said panel (1, 2), wherein the groove is laterally defined by an outer long side (25), which is related to the corresponding outer face (10, 11) of the panel (1, 2), an inner long side (26) opposing the respective outer long side (25) and a base (27) connecting the outer long side (25) and the inner long side (26), and is adapted to the shape and position of the engaging protrusions (8, 9) of said panel (1, 2) so that the engaging protrusions (8, 9) of said panel (1, 2) may each positively engage in a corresponding groove (21, 22) of a similarly shaped second panel (1) positioned closely next to the first panel (2),
**characterized in that**
- the outer long side (25), the inner long side (26) and the base (27) of the grooves (21, 22) are covered by sheet metal of the face sheet (3, 4) related to the respective outer face (10, 11),
- each engaging shaped element (19, 20), each of which is supported by the engaging protrusions (8, 9), is positioned on that side (18) of the respective engaging protrusions (8, 9), which is related to the inner long side (26) of groove (21, 22) corresponding to the respective engaging protrusion (8, 9),
- each of the grooves (21, 22) is defined by a wall portion (23, 24) on its respective outer face, wherein the outer face of the wall portion is aligned to the respective outer face (12, 13) of the wall panels (1, 2), and the thickness of the wall portions (23, 24) of the panel (1, 2), which are covered with the sheet metal of the respective face sheet (3, 4), is slightly undersized with respect to distance (A), by which the engaging protrusions are offset with respect to the outer faces (12, 13) of panels (1, 2), and
- at each of the inner long sides (26) of the grooves (21, 22) an engaging shaped element (31, 32) is formed and positioned so that in an assembled state, the engaging protrusions (8, 9) of the second panel (1) are flexibly and elastically engageable, via their respective engaging shaped element (19, 20), with the engaging shaped element (31, 32) at the inner long side (26) of the respectively related groove (21, 22) of panel (1, 2), so that, in the assembled state, the engaging protrusions (8, 9) abut with an initial tension with their engaging shaped elements (31, 32) the inner long side (26) of each related groove (21, 22).

2. Panel according to claim 1, **characterized in that** the contact surfaces of the engaging shaped elements (19, 20) of the engaging protrusions (8, 9) and the contact surfaces of the engaging shaped elements (31, 32) of the related groove (21, 22) have a rounded shape in cross-section view, so that an engagement formed in the assembled state between the respective engaging shaped element (19, 20) of the engaging protrusion (8, 9) and the engaging shaped element (31, 32) of the groove (21, 22) related to the respective engaging protrusion (8, 9) may be disengaged.

3. Panel according to one of the preceding claims, **characterized in that**, in cross-section view, the sheet metal of the face sheet (3, 4) is respectively provided beyond the groove (21, 22) related to this face sheet (3, 4) towards the respective opposing outer face (10, 11) of the panel (1, 2).

4. Panel according to claim 3, **characterized in that** each of the inner long sides (26) of the grooves (21, 22) merges into a protrusion (30) bulging out with respect to the respective narrow side (7) of the panel (1, 2).

5. Panel according to claim 4, **characterized in that** the limb of the respective face sheet (3, 4), which is attached to the portion (33) of the face sheet (3, 4) covering the respective protrusion (30), extends into the insulation core.

6. Panel according to one of the preceding claims, **characterized in that** in cross-section view, the respective sheet metal of the face sheets (3, 4) is provided beyond the engaging protrusion (8, 9) related to the respective face sheet (3, 4) towards the respective opposing outer face (10, 11) of the panel (1, 2).

7. Panel according to claim 6 and of the claims 4 or 5, **characterized in that** each of the face sheets (3, 4) comprises a portion (15) attached to their portion (14) covering the respective engaging protrusion (8, 9), wherein the width of the portion (15) corresponds to the width of the protrusion (30), into which each of the long sides (26) of the grooves (21, 22) of the panel (1, 2) merges.

8. Panel according to one of the claims 6 or 7, **characterized in that** each of the face sheets (3, 4) with their portions (14) covering the respective engaging protrusion (8, 9) ends in a limb (16), which extends into the insulation core (5).

9. Panel according to one of the preceding claims,
**characterized in that** the panel has a middle portion (17) on its first narrow side (6), which is provided with the engaging protrusions (8, 9), at which the insulation core (5) is exposed.

10. Panel according to one of the preceding claims,
**characterized in that** the panel has a middle portion (34) on its second narrow side (7), which is provided with the grooves (21, 22), at which the insulation core (5) is exposed.

11. Panel according to claim 10, **characterized in that** the middle portion (34) is recessed with respect to the loose end of the wall portions (23, 24) defining the grooves (21, 22) of the respective outer face (10, 11) of the panel (1, 2).

12. Panel according to one of the claims 9 to 11,
**characterized in that** the position and the shape of the middle portions (17, 34) of the narrow sides (6, 7) of the panel (1, 2) are matched in such a way, that in the assembled state the respective middle portion (17, 34) of the panel (1, 2) abuts the related narrow side (6, 7) of a similarly formed second panel (1, 2), which is placed closely to the first panel (1, 2), with contact pressure.

13. Flat construction component, like a wall or ceiling, composed of at least two panels (1, 2) comprising
- an insulation core (5) formed of a thermally insulating construction material and
-- face sheets (3, 4) prefabricated from a sheet metal, at least partially covering the insulation core (5) on its outer faces,
- wherein at one narrow side of said second panel (2) two engaging protrusions (8, 9) filled with material of the insulation core are formed, each supporting an engaging shaped element (19, 20), each of the engaging protrusions being alotted to one of the outer faces (10, 11) of said second panel (2) and being enclosed by the sheet metal of said face sheet (3, 4), which is related to the respective outer face (10, 11) of said second panel (2), and
- wherein a groove (21, 22) is formed into each narrow side (7) of the first panel (1), which is related to the narrow side (6) of the second panel (2), which is provided with engaging protrusions (8, 9), wherein the groove is formed adjacent to each of the outer faces (12, 13) of said first panel (1), wherein the groove is laterally defined by an outer long side (25), which is related to the corresponding outer face (10, 11) of the first panel (1), an inner long side (26) opposing the respective outer long side (25), and a base (27) connecting the outer long side (25) and the inner long side (26), and is adapted to the shape and position of the engaging protrusions (8, 9) of said second panel (2) so that the engaging protrusions (8, 9) of said second panel (2) each positively engage in the related corresponding groove (21, 22) of the first panel (1),
**characterized in that**,
- the outer long side (25), the inner long side (26) and the base (27) of the grooves (21, 22) of the first panel (1) are covered by sheet metal of the face sheet (3, 4) of the first panel (1) related to the respective outer face (10, 11),
- each engaging shaped element (19, 20), each of which is supported by the engaging protrusions (8, 9) of the second panel (2), is positioned on that side of the respective engaging protrusions (8, 9), which is related to the inner long side (26) of groove (21, 22) corresponding to the respective engaging protrusion (8, 9),
- each of the grooves (21, 22) is defined by a wall portion (23, 24) on its respective outer face, wherein the outer face of the wall portion is aligned flush with the respective outer face (12, 13) of the wall panels (1, 2), and the thickness of the wall portions (23, 24) of the panel (1, 2), which are covered with the sheet metal of the respective face sheet (3, 4), is slightly undersized with respect to distance (A), by which the engaging protrusions (8, 9) are offset with respect to the outer faces (12, 13) of panels (1, 2),
- at each of the inner long sides (26) of the grooves (21, 22) of the first panel (1) an engaging shaped element (31, 32) is respectively formed and positioned so that the engaging protrusions (8, 9) of the second panel (2) are flexibly and elastically engageable, via their respective engaging shaped element (19, 20), with the engaging shaped element (31, 32) at the inner long side (26) of the respectively related groove (21, 22) of panel (2), so that, in the assembled state, the engaging protrusions (8, 9) abut with an initial tension with their engaging shaped elements (31, 32) the inner long side (26) of each related groove (21, 22).

14. Construction component according to claim 13, **characterized in that** the panels (1, 2) are designed according to one of claims 1 to 12.

15. Construction component according to one of claims 13 or 14, **characterized in that** a sealing (35, 36) is arranged between the panels (21, 22), covering the joining zone (F) between the panels (1, 2) with respect to the environment (U) of the construction component (W).

## Revendications

1. Panneau pour la construction d'un mur ou d'un plafond d'une construction,
- comportant une âme isolante (5) en un matériau de construction isolant thermique, et
- comportant des feuilles de parement (3, 4) préfabriquées à partir d'une feuille métallique (S1, S2) recouvrant au moins partiellement l'âme isolante (5) sur ses faces extérieures,
- dans lequel au niveau d'un premier côté étroit (6) du panneau (1, 2) deux protubérances d'enclenchement (8, 9) remplies du matériau de l'âme isolante et chacune formée de façon à supporter un élément en forme d'enclenchement (19, 20), chacune des protubérances d'enclenchement étant allouée à l'une des faces extérieures (10, 11) du panneau (1, 2) et étant enfermée par la feuille métallique de la feuille de parement (3, 4) qui est associée à la face extérieure (10, 11) respective du panneau (1, 2), et
dans lequel une gorge (21, 22) est formée dans chaque côté étroit (7) du panneau (1, 2) opposé au premier côté étroit (6), dans lequel la gorge est formée à côté de chacune des faces extérieures (12, 13) du panneau (1, 2), dans lequel la gorge est définie latéralement par un côté long extérieur (25), qui est associé à la face extérieure (10, 11) correspondante du panneau (1, 2), un côté long intérieur (26) opposé au côté long extérieur respectif (25) et une base (27) reliant le côté long extérieur (25) et le côté long intérieur (26), et est adaptée à la forme et à la position des protubérances d'enclenchement (8, 9) du panneau (1,2) de sorte que chacune des protubérances d'enclenchement (8, 9) du panneau (1,2) peut s'engager positivement dans une gorge correspondante (21, 22) d'un deuxième panneau (1) de forme similaire disposé à côté du premier panneau (2),
**caractérisé en ce que**
- le côté long extérieur (25), le côté long intérieur (26) et la base (27) des gorges (21, 22) sont recouverts par la feuille métallique de la feuille de parement (3, 4) associée à la face extérieure (10, 11) respective,
- chaque élément en forme d'enclenchement (19, 20), dont chacun est supporté par les protubérances d'enclenchement (8, 9), est disposé sur le côté (18) des protubérances d'enclenchement (8, 9) respectives qui est associé au côté long intérieur (26) de la gorge (21, 22) correspondant à la protubérance d'enclenchement (8, 9) respective,
- chacune des gorges (21, 22) est définie par une portion de mur (23, 24) sur sa face extérieure respective, la face extérieure de la portion de mur est alignée sur la face extérieure respective (12, 13) des panneaux de mur (1, 2), et l'épaisseur des portions de mur (23, 24) du panneau (1, 2), qui est recouvert de la feuille métallique de la feuille de parement respective (3, 4), est légèrement sous-dimensionnée par rapport à une distance (A), de laquelle les protubérances d'enclenchement sont décalées par rapport aux faces extérieures (12, 13) des panneaux (1, 2), et
- au niveau de chacun des côtés longs intérieurs (26) des gorges (21, 22), un élément en forme d'enclenchement (31, 32) est formé et positionné de telle sorte que dans un état assemblé, les protubérances d'enclenchement (8, 9) du deuxième panneau (1) peuvent s'enclencher de façon souple et élastique, par intermédiaire de leur élément en forme d'enclenchement (19, 20) respectif, avec l'élément en forme d'enclenchement (31, 32) au niveau du côté long intérieur (26) de la gorge respectivement associée (21, 22) du panneau (1, 2), de sorte que, dans l'état assemblé, les protubérances d'enclenchement (8, 9) butent avec une tension initiale avec leurs éléments en forme d'enclenchement (31, 32) sur le côté long intérieur (26) de chaque gorge associée (21, 22).

2. Panneau selon la revendication 1, **caractérisé en ce que** les surfaces de contact des éléments en forme d'enclenchement (19, 20) des protubérances d'enclenchement (8, 9) et les surfaces de contact des éléments en forme d'enclenchement (31, 32) de la gorge (21, 22) associée ont une forme arrondie dans une vue en coupe, de sorte qu'un enclenchement formé dans l'état assemblé entre l'élément en forme d'enclenchement (19, 20) respectif de la protubérance d'enclenchement (8, 9) et l'élément en forme d'enclenchement (31, 32) de la gorge (21, 22) associée à la protubérance d'enclenchement (8, 9) respective, peut être désengagé.

3. Panneau selon l'une quelconque des revendications précédentes, **caractérisé en ce que**, dans une vue en coupe, la feuille métallique de la feuille de parement (3, 4) est prévue respectivement au-delà de la gorge (21, 22) associée à la feuille de parement (3, 4) en direction de la face extérieure opposée respective (10, 11) du panneau (1, 2).

4. Panneau selon la revendication 3, **caractérisé en ce que** chacun des côtés longs intérieurs (26) des gorges (21, 22) fusionne en une protubérance (30) bombée vers l'extérieur par rapport au côté étroit (7) respectif du panneau (1, 2).

5. Panneau selon la revendication 4, **caractérisé en ce que** le membre de la feuille de parement (3, 4) respective, qui est attaché à la portion (33) de la feuille de parement (3, 4) recouvrant la protubérance respective (30), s'étend dans l'âme isolante.

6. Panneau selon l'une quelconque des revendications précédentes, **caractérisé en ce que** dans une vue en coupe, la feuille métallique respective des feuilles de parement (3, 4) est prévue au-delà de la protubérance d'enclenchement (8, 9) associée à la feuille de parement (3, 4) respective en direction de la face extérieure opposée (10, 11) respective du panneau (1, 2).

7. Panneau selon la revendication 6 et selon les revendications 4 ou 5, **caractérisé en ce que** chacune des feuilles de parement (3, 4) comprend une portion (15) fixée à la portion (14) recouvrant la protubérance d'enclenchement (8, 9) respective, dans lequel la largeur de la portion (15) correspond à la largeur de la protubérance (30) dans laquelle chacun des côtés longs (26) des gorges (21, 22) du panneau (1, 2) fusionne.

8. Panneau selon l'une des revendications 6 ou 7, **caractérisé en ce que** chacune des feuilles de parement (3, 4) avec la portion (14) recouvrant la protubérance d'enclenchement (8, 9) respective se termine en un élément (16) qui s'étend dans l'âme isolante (5).

9. Panneau selon l'une quelconque des revendications précédentes,
**caractérisé en ce que** le panneau comporte une partie intermédiaire (17) sur son premier côté étroit (6), qui est muni des protubérances d'enclenchement (8, 9), au niveau de laquelle l'âme isolante (5) est exposée.

10. Panneau selon l'une quelconque des revendications précédentes,
**caractérisé en ce que** le panneau comporte une partie intermédiaire (34) sur son deuxième côté étroit (7), qui est munie des gorges (21, 22), au niveau de laquelle l'âme isolante (5) est exposée.

11. Panneau selon la revendication 10, **caractérisé en ce que** la partie intermédiaire (34) est en renfoncement par rapport à l'extrémité libre des portions de mur (23, 24) définissant les gorges (21, 22) de la face extérieure (10, 11) respective du panneau (1, 2).

12. Panneau selon l'une quelconque des revendications 9 à 11,
**caractérisé en ce que** la position et la forme des parties intermédiaires (17, 34) des côtés étroits (6, 7) du panneau (1, 2) sont adaptées de telle manière que, dans l'état assemblé, la partie intermédiaire respective (17, 34) du panneau (1, 2) bute sur le côté étroit (6, 7) associé d'un deuxième panneau (1, 2), formé de façon similaire, qui est placé juste à côté du premier panneau (1, 2) avec une pression de contact.

13. Élément de construction plate, comme un mur ou un plafond, composé d'au moins deux panneaux (1, 2) comprenant :
- une âme isolante (5) en un matériau de construction isolant thermique, et
- des feuilles de parement (3, 4) préfabriquées à partir d'une feuille métallique, recouvrant au moins partiellement l'âme isolante (5) sur ses faces extérieures,
- dans lequel au niveau d'un côté étroit du deuxième panneau (2) deux protubérances d'enclenchement (8, 9) remplies du matériau de l'âme isolante sont formées, chacune supportant un élément en forme d'enclenchement (19, 20), chacune des protubérances d'enclenchement étant allouée à l'une des faces extérieures (10, 11) du deuxième panneau (2) et étant enfermée par la feuille métallique de la feuille de parement (3, 4) qui est associée à la face extérieure (10, 11) respective du deuxième panneau (2), et
dans lequel une gorge (21, 22) est formée dans chaque côté étroit (7) du premier panneau (1) qui est associé au côté étroit (6) du deuxième panneau (2) qui est muni de protubérances d'enclenchement (8, 9), dans lequel la gorge est formée à côté de chacune des faces extérieures (12, 13) du premier panneau (1), dans lequel la gorge est définie latéralement par un côté long extérieur (25), qui est associé à la face extérieure correspondante (10, 11) du premier panneau (1), un côté long intérieur (26) opposé au côté long extérieur respectif (25), et une base (27) reliant le côté long extérieur (25) et le côté long intérieur (26), et est adaptée à la forme et à la position des protubérances d'enclenchement (8, 9) du deuxième panneau (2) de sorte que chacune des protubérances d'enclenchement (8, 9) du panneau deuxième (2) s'enclenche positivement dans la gorge correspondante associée (21, 22) du premier panneau (1),
**caractérisé en ce que**
- le côté long extérieur (25), le côté long intérieur (26) et la base (27) des gorges (21, 22) du premier panneau (1) sont recouverts par la feuille métallique de la feuille de parement (3, 4) du premier panneau (1) associée à la face extérieure respective (10, 11),
- chaque élément en forme d'enclenchement (19, 20), dont chacun est supporté par les protubérances d'enclenchement (8, 9) du deuxième panneau (2), est disposé sur le côté des protubérances d'enclenchement (8, 9) respectives qui est associé au côté long intérieur (26) de la gorge (21, 22) correspondant à la protubérance d'enclenchement (8, 9) respective,
- chacune des gorges (21, 22) est définie par une portion de mur (23, 24) sur sa face extérieure respective, la face extérieure de la portion de mur est alignée en affleurement avec la face extérieure respective (12, 13) des panneaux de mur (1, 2), et l'épaisseur des portions de mur (23, 24) du panneau (1, 2), qui sont recouvertes de la feuille métallique de la feuille de parement respective (3, 4), est légèrement sous-dimensionnée par rapport à une distance (A), de laquelle les protubérances d'enclenchement (8, 9) sont décalées par rapport aux faces extérieures (12, 13) des panneaux (1, 2),
- au niveau de chacun des côtés longs intérieurs (26) des gorges (21, 22) du premier panneau (1) un élément en forme d'enclenchement (31, 32) est respectivement formé et positionné de telle sorte que les protubérances d'enclenchement (8, 9) du deuxième panneau (2) peuvent s'enclencher de façon souple et élastique, par l'intermédiaire de leur élément en forme d'enclenchement respectif (19, 20), avec l'élément en forme d'enclenchement (31, 32) au niveau du côté long intérieur (26) de la gorge respectivement associée (21, 22) du panneau (2), de sorte que, dans l'état assemblé, les protubérances d'enclenchement (8, 9) butent avec une tension initiale avec leurs éléments en forme d'enclenchement (31, 32) sur le côté long intérieur (26) de chaque gorge associée (21, 22).

14. Élément de construction selon la revendication 13, **caractérisé en ce que** les panneaux (1, 2) sont conçus selon l'une quelconque des revendications 1 à 12.

15. Élément de construction selon l'une quelconque des revendications 13 ou 14, **caractérisé en ce qu'**un joint (35, 36) est agencé entre les panneaux (21, 22), couvrant la zone de jonction (F) entre les panneaux (1, 2) par rapport à l'environnement (U) de l'élément de construction (W).
